# EUROPEAN PATENT SPECIFICATION

(11) **EP 2 765 523 B1**
(45) Date of publication and mention of the grant of the patent: **19.06.2019**
(21) Application number: 12857389.6
(22) Date of filing: 14.12.2012
(51) Int. Cl.: G06F 16/48, G06Q 10/10

(54) **METHOD AND DEVICE FOR PROCESSING USER GENERATED CONTENT**
VERFAHREN UND VORRICHTUNG ZUR VERARBEITUNG VON BENUTZERGENERIERTEM INHALT
PROCÉDÉ ET DISPOSITIF DE TRAITEMENT D'UN CONTENU GÉNÉRÉ PAR UN UTILISATEUR

(30) Priority: 16.12.2011 CN 201110422780
(43) Date of publication of application: 13.08.2014
(73) Proprietor: Tencent Technology (Shenzhen) Company Limited, Shenzhen, Guangdong 518044 (CN)
(72) Inventor: LIANG, Zhu, Shenzhen Guangdong 518044 (CN); FENG, Xin, Shenzhen Guangdong 518044 (CN)
(74) Representative: Mewburn Ellis LLP
(86) International application number: PCT/CN2012/086616
(87) International publication number: WO 2013/087020

(56) References cited:
- CN-A- 101 916 274
- CN-A- 101 930 456
- US-A1- 2002 140 733
- US-A1- 2006 167 747
- US-A1- 2010 082 624
- US-B1- 7 818 336

## Description

### FIELD OF THE TECHNICAL

The present disclosure relates to network information processing technology field, and specifically, to a method and a device for processing a user generated content (UGC).

### BACKGROUND

With the development of the Internet technology, the Internet gradually becomes an important source for people to obtain information. Users are not only the browsers of website, but also the producers of the website, especially after the Internet enters the area of Web2.0. The content generated by the users is known as user generated content (UGC), such as, blog articles, photos posted by the users etc.

In the existing social network system, the presentation of the UGC mainly includes two ways. One way is presented in classification, such as, a blog catalogue is configured to present blog articles, album catalogue is configured to present photos, and video catalogue is configured to present videos etc. The other way is present in a simple time online, that is, a presentation order of the UGC is generated in time order.

US 2002/0140733 discloses a calendar desktop GUI comprises a schedule having at least one time slot identifying at least one activity and at least one link associated with the activity. The link starts at least one computer program and opens a computer file associated with the activity.

### SUMMARY

The invention is defined by the features of the independent claims. Further embodiments are the subject-matter of the dependent claims.

In view of this, the present disclosure provides a method for processing the UGC to reduce times of man machine interaction when the user browses several related UGCs and saves a network resource.

The technology solution of present disclosure is realized as:
a method for processing a user generated content (UGC), at a device having one or more processors and a memory for storing one or more programs to be executed by the one or more process, includes:
providing an interface, receiving a calendar entry establishment request of a user, and establishing a calendar entry on the interface;
searching for a UGC matching the calendar entry, displaying the UGC on the interface;
receiving a selection command for the selecting the UGC from the interface, and associating the UGC selected with the calendar entry; and
displaying the calendar entry and information of the UGC associated with the calendar entry on the interface.

A device for processing a user generated content (UGC), the device comprises one or more processors, a memory storing one or more program modules configured for execution by the one or more processors, the one or more program modules including instructions for:
a calendar entry establishing module, configured to provide an interface, receive a calendar entry establishment request of a user to establish a calendar entry on the interface;
a UGC searching module, configured to search for a UGC matching the calendar entry, and display the UGC on the interface;
an associating module, configured to receive a selection command for selecting the UGC by the user from the interface, and associate the UGC selected with the calendar entry;
a calendar entry displaying module, configured to display the calendar entry and information of the UGC associated with the calendar entry on the interface;

In the embodiment of present disclosure, several related UGC are associated by establishing calendar entry, the information associated with the calendar entry is displayed when the calendar entry is displayed. Each event can be represented by one calendar entry, thus, several fragmented UGCs are gathered in event. It is convenience for the user to browse several UGCs related with a same event. The times of man machine interaction is reduced when the user browses the several UGCs related with a same event, and the network resource is saved.

### BRIEF DESCRIPTION OF THE DRAWINGS

In order to illustrate technical solutions according to embodiments of the disclosure, the drawings to be used in the description of the embodiments of the disclosure will be described briefly hereinafter. The drawings described hereinafter include only some embodiments related to the present disclosure. Other drawings may be determined by those skilled in the art based on these drawings without any creative effort.
FIG. 1 is a schematic diagram of a calendar entry according to an embodiment of present disclosure.
FIG.2 is a flow chart of a method for processing a UGC according to an embodiment of present disclosure.
FIG.3 is a schematic diagram of an interface establishing a calendar entry according to an embodiment of present disclosure.
FIG. 4 is a schematic diagram of an interface displaying a found matched UGC when establishing a calendar entry according to an embodiment of present disclosure.
FIG.5a and FIG.5b are schematic diagrams of interfaces displaying a calendar entry and information of the UGC associated with the calendar.
FIG.6 is a schematic diagram of an interface noticing the user to establish a calendar entry.
FIG.7 is a schematic diagram of an interface inquiring and displaying an established calendar entry.
FIG.8 is a structure schematic diagram of a device for processing the UGC according to an embodiment of present disclosure.
FIG.9 is a structure schematic diagram of a device for processing the UGC according to an embodiment of present disclosure.

### DETAILED DESCRIPTION OF ILLUSTRATED EMBODIMENTS

Further description of present disclosure will be illustrated, which combined with embodiments in drawings and detailed embodiments.

According to the presentation of the UGC in typical technology, several UGCs of a same event are split respectively and presented respectively. For example, if a user wants to describe a trip, many kinds of UGC may be posted, such as posting multiple items of microblog content, writing one or second weblogs, or uploading many trip pictures through mobile phone or personal computer (PC) many times. The processing way in typical technology, the UGCs are only presented in a fragmented way, which is presented in UGC catalogue, or presented in establishing time of the UGCs. Regardless presenting in any way, other UGCs are mixed in, the multiple UGCs may not be combined in the same event. When the user or the friends of the user want to browse the UGCs of a same event, they need to search the UGCs related with the same event (for example, a trip) from huge amount of UGCs of multiple kinds. The operation is difficult and the times of man machine interaction increase dramatically. Each time of the man machine interaction, operation requesting information is requested, calculation process is trigged, and response result information is generated that many resource is occupied (such as client resource, server resource, broadband resource).

In order to solve the problem described above, a method for processing UGC is provided in the embodiment of present disclosure. In the method provided in the embodiment of present disclosure, the calendar entry is established, several related UGCs are associated, and the calendar entry is displayed when the associated UGCs are displayed. Each event can be represent by one calendar entry, thus, several fragmented UGCs are gathered in event. It is convenience for the user to browse several UGCs related with a same event. The times of man machine interaction is reduced when the user browses the several UGCs related with a same event, and the network resource is saved.

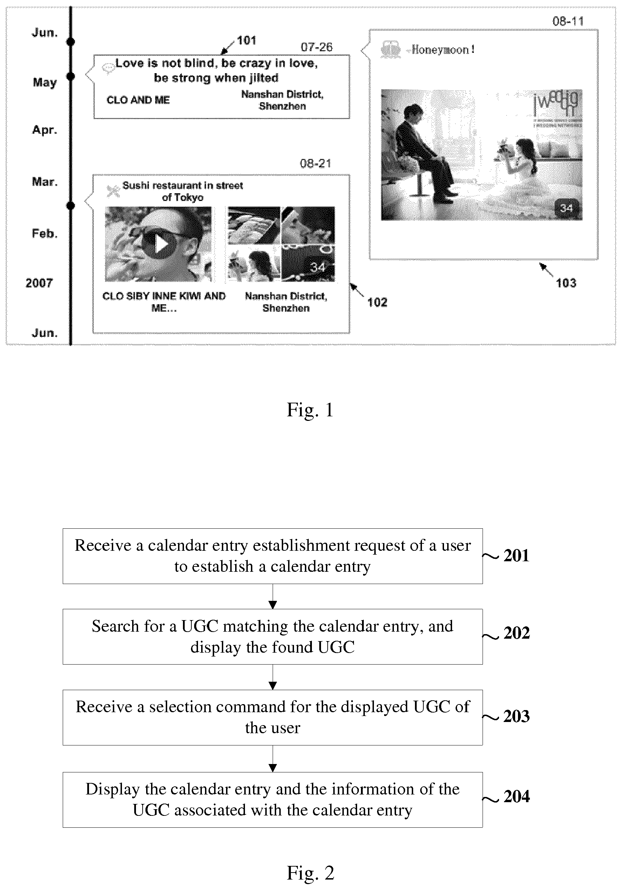

A calendar entry may include time information and textual description in the embodiment of present disclosure. In order to establish a calendar entry, the system may notice the user to input time information and textual description. The time information and the textual description input by the user are recorded by the system to generate a calendar entry with the time information and the textual description. Of course, when the calendar entry is established, the system further notices the user to input geographical information to generate a calendar entry with time information, textual description and geographical information. Of course, when the calendar entry is established, the system may only notice the user to input the geographical information to generate a calendar entry with the geographical information. FIG.1 is a schematic diagram of a calendar entry according to an embodiment of present disclosure. Referring to FIG.1, every display box 101,102,103 is a calendar entry, and an establishing time of each calendar entry is in the upper right corner.

Because calendar entry includes time information and textual description input by the user, each event can be represented by a calendar entry. The calendar entry severs as a point of convergence in the embodiment of present disclosure, and a UGC collection labeled with event by associating related UGC together, thus, it is convenience for the user to browse.

FIG.2 is a flow chart of a method for processing a UGC according to an embodiment of present disclosure. Referring to FIG.2, the flow chart is described as below.

Step 201, providing an interface, receiving a calendar entry establishment request of a user and establishing a calendar entry on the interface.

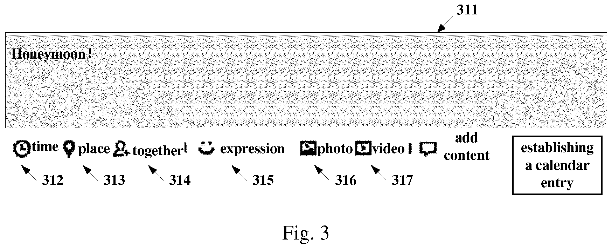

An "establishing a calendar entry" widget is provided in a user interface by the system. When the widget is clicked by the user, a calendar entry establishment request is trigged. A calendar entry establishment interface may be displayed when the calendar entry establishment request is received by the system. FIG.3 is schematic diagram of an interface establishing a calendar entry according to an embodiment of present disclosure. Referring to FIG.3, at least textual description 311 and time information 312 are noticed to be input by the user in an establishing interface of the calendar entry. The textual description and time information input by the user are recorded by the system to generate the calendar entry with the textual description and the time information. When the calendar entry is established, the system further notices the user to input geographical information ("location" in FIG.3) 313, figure ("together" in the FIG.) 314, expression 315, photo 316, video 317 etc. When the "establishing a calendar entry" widget is clicked by the user, the information input by the user is recorded by the system and the calendar entry with the input information is generated.

Step 202, searching for a UGC matching the calendar entry and displaying the UGC on the interface.

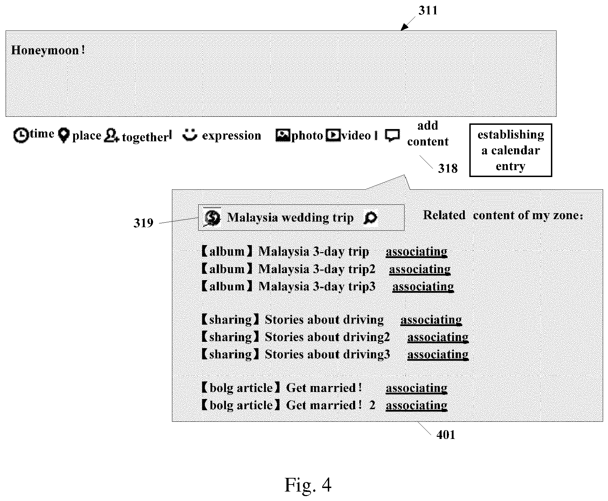

FIG.4 is a schematic diagram of an interface displaying a found matched UGC when establishing a calendar entry according to an embodiment of present disclosure. Referring to FIG.4, a widget 318 for trigger a search of a UGC matching the calendar is included in the establishing interface of the calendar entry. A search is trigged when the widget is clicked. A search scope includes blog articles, photos, sharing, microblogs etc. posted by the user and/ or posted by the friends of the user or other calendar entry established by the user and the friends of the user. That is, the calendar entry may be associated with other calendar entry. A content of the found UGC is displayed in a displaying box 401.

The search of a UGC matched with the calendar entry includes as follows.

A UGC which time information matches a preset matching rule with the time information is searched; and /or a keyword of the calendar entry textual description (such as FIG. 4 shows a displaying content displayed in the displaying box 319 are keywords extracted from the calendar entry textual description) is extracted, the UGC which keyword matches with a preset matching rule is searched. If the calendar entry further includes geographical information, further the UGC which geographical information matches with the preset matching rule is searched for.

The preset matching rule may be preset and stored, and present and stored according to a business requirement. For example, a matching rule of time information may be set: searching the UGC happened in a same day (or a same week, or other time period) with the calendar entry; a matching rule of the keyword may be set: searching the UGC which content includes the keyword; a matching rule of the geographical information may be set: searching the UGC which content includes the geographical information, etc.

The detail method of extracting a keyword of the calendar entry textual description can use various keyword extracting algorithms, it is not described in detail in the present disclosure.

Step 203, receiving a selection command for the selecting the UGC by the user from the interface.

In FIG.4, matched UGC information being found is displayed in the displaying box 401, and an "associating" linkage or widget is displayed beside the UGC information. When the "associating" linkage or widget is clicked by the user, a selection command is determined to be posted by the user, and the UGC is associated with the calendar entry. A detailed association process is described as follows.

Summary information of the associated UGC (such as, a title of the UGC, a first sentence, or keyword information extracted by a keyword extracting algorithm, etc.) is extracted, the summary information of the UGC is stored as a attachment of associating calendar entry. If a UGC is associated with several UGCs, then the calendar entry includes several attachments formed by summary information.

Step 204, displaying the calendar entry and information of the UGC associated with the calendar entry on the interface.

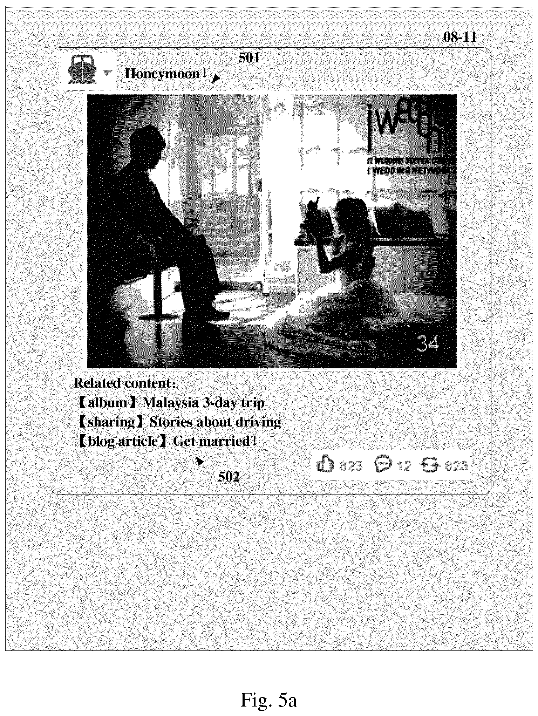

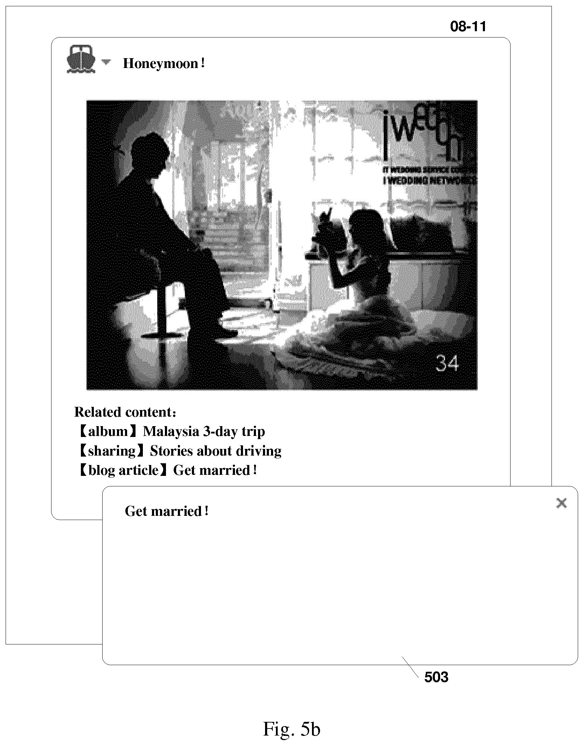

In the step, the detail method of displaying the calendar entry and the information of the UGC associated with the calendar entry is as follows. The calendar entry and the information of the UGC associated with the calendar entry are displayed on an interface of both the calendar entry creator and the friends of the calendar entry creator. Such as the interface displaying the calendar entry and the information of the UGC associated with the calendar entry shown in the FIG.5a and FIG.5b. Referring to FIG.5a, when the calendar 501 is shown by the system, the attachments of the calendar entry is read, that is the summary information of the associated UGC is read, and the summary information of the associated UGC is displayed. When an item of summary information of a UGC is clicked by a user, detail information of the UGC is read and displayed. As shown in FIG.5b, the last UGC is clicked, and the detail information 503 of the UGC is read and displayed.

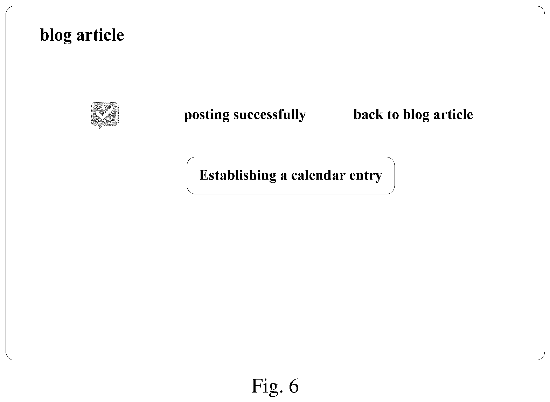

The embodiment of the present disclosure shown in FIG. 2 is trigged to execute when a request of establishing a calendar entry being triggered by the user is received. In other embodiment, the request of establishing a calendar entry is automatically triggered after the UGC is established. The embodiment includes: receiving an UGC establishing request of the user (such as a request of establishing a weblog or a request of uploading a picture) and establishing an UGC; prompting the user to establish a calendar entry as shown in FIG.6, when a weblog is posted successfully (or established), a "establishing a calendar entry" widget is displayed, when the "establishing a calendar entry" widget is clicked by the user, the step 201 to step 203 are implemented to further guide the user to add other fragmented and non-associated UGCs which are the user's and the friends of the user; then, associating the UGC with the calendar entry established by the user. Lastly, the step 204 is implemented.

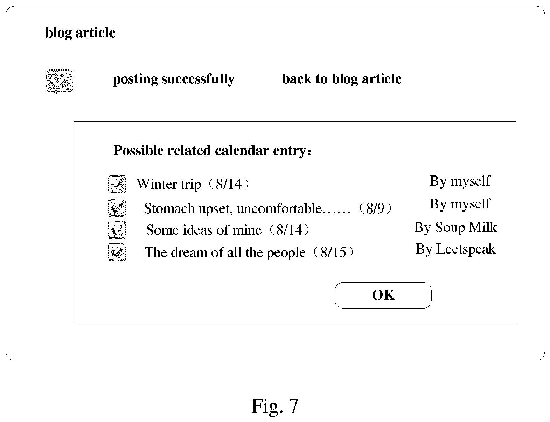

In other embodiment, when the calendar entry is established by the user and /or friends of the user, after the step of receiving an UGC establishing request of the user, the method further includes: establishing an UGC requested to be established by the user, then inquiring and displaying the information of calendar entry established by the user and the friends of the user as shown in FIG.7; receiving the selection command of the displayed information of the calendar entry, associating the calendar entry selected by the user with the UGC established by the user, then further displaying the latest summary information of the UGC when the calendar entry is displayed next time.

Further, in present disclosure, the calendar entry is added with timestamp when the calendar entry is established. The timestamp is updated when the UGC is established and the UGC is associated with the calendar entry. The calendar entries are displayed in order of the timestamps when the calendar entries are displayed on the interface of both the calendar entry creator and the friends of the calendar entry creator. That is, the calendar entry with the latest timestamp is displayed in front. With this processing, once the UGC is established and associated with the calendar entry by the user, the timestamp is updated, the calendar entry is set top again in the interface of both the user and the friends of the user, and an update effect is achieved. The related content is spread by attracting the user to associate the related content, and is exposed in the front especially in the user interface including multiple UGC messages.

A device for processing the UGC is disclosed in present disclosure. The device comprises one or more processors, and a memory storing one or more program modules, the one or more programs including instructions for the above described method for processing the UGC.

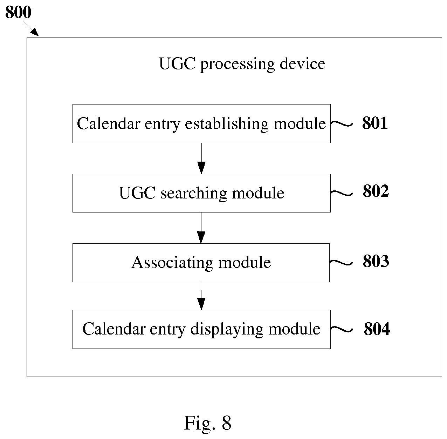

FIG.8 is a structure schematic diagram of a device for processing the UGC according to an embodiment of present disclosure. Referring to FIG.8, the device 800 includes the following modules.

A calendar entry establishing module 801, which is configured to provide an interface, receive a calendar entry establishment request of a user to establish a calendar entry on the interface.

A UGC searching module 802, which is configured to search for a UGC matching the calendar entry, and display the UGC which is found on the interface.

An associating module 803, which is configured to receive a selection command for selecting the UGC by the user from the interface, and associate the UGC selected by the user with the calendar entry.

A calendar entry displaying module 804, which is configured to display the calendar entry and information of the UGC associated with the calendar entry on the interface.

A detail function of each module may refer to the embodiment of the method described above, it is not described here.

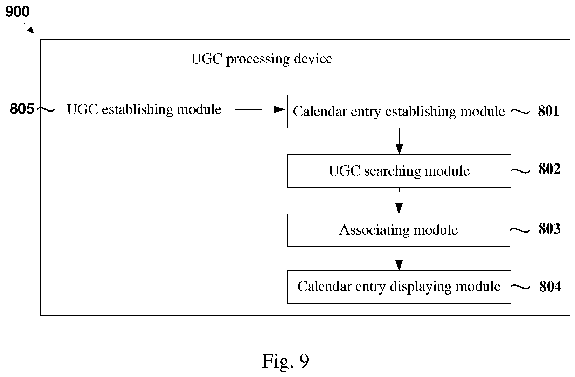

FIG.9 is a structure schematic diagram of a device for processing the UGC according to another embodiment of present disclosure. Referring to FIG.9, the device includes: a calendar entry establishing module 801, a UGC searching module 802, an associating module 803, a calendar entry displaying module 804 and a UGC establishing module 805. The calendar entry establishing module 801, the UGC searching module 802, the associating module 803, and the calendar entry displaying module 804 has the same function with corresponding module in FIG. 8, they are not described in detail here. The UGC establishing module 805 is configured to receive a UGC establishing request of the user, establish the UGC, and prompt the user to establish the calendar entry after the UGC is established.

The UGC establishing module 805 is further configured to search the calendar entry established by the user and/or the friends of the user after the UGC is established, and display the searched information of the calendar entry. The associating module 803 is further configured to receive the selection command of the user displayed by the UGC establishing module 805, associate the calendar entry selected by the user with the UGC established by the user, then, further display the latest summary information of the UGC when displaying the UGC again.

In embodiment of present disclosure, each module may be realized by software (such as computer readable instruction stored in memory), also may be realized by hardware (such as a processor of ASIC), or may be realized by a combination of software and hardware.

The embodiment of present disclosure may be realized by a combination of software and hardware. For example, each method, step and each function module described in the embodiment of present disclosure may be realized by a processor (The processor referred to here means broader processor, such as, CPU, processing unit, ASIC, logic unit, programmable logic unit, etc.). The process, method, and function module described in the embodiment of present disclosure may be realized by an individual processor or be realized by several processors. The processor in the embodiment of present disclosure or described in the claim may be understood as one processor or several processors. Moreover, the embodiment described may be realized by software production. The software production is stored in non-volatile storage media and includes a series of instruction to make a computer device (such as personal computer, server or network equipment) to implement the method described in the embodiment of present disclosure.

The drawings in the embodiment of present disclosure are only embodiments, some modules and steps are not necessary to realize the present disclosure. The modules may be combined to a module or be divided into several sub-modules.

## Claims

1. A method for processing a user generated content (UGC), comprising:
at a device having one or more processors and a memory for storing one or more programs which are executable by the one or more processors to perform the steps of:
providing an interface;
receiving a calendar entry establishment request of a user, and establishing a calendar entry on the interface,
**characterised in that**:
the one or more programs are further executable by the one or more processors to perform the steps of:
searching for a UGC matching the calendar entry, and displaying the UGC on the interface, wherein the calendar entry comprises time information and textual description representative of an event, and wherein the calendar entry serves as a point of convergence for a collection of UGCs labeled with the event;
receiving a selection command for selecting the UGC from the interface, and associating the UGC selected with the calendar entry, wherein associating the UGC comprises:
extracting summary information of the UGC to be associated, and
storing the extracted summary information as an attachment of the calendar entry; and
displaying the calendar entry and information of the UGC associated with the calendar entry on the interface, wherein, when displaying the calendar entry, the summary information of the associated UGC is read and displayed.

2. The method according to claim 1, wherein the step of receiving a calendar entry establishment request of a user, and establishing a calendar entry on the interface, comprises:
noticing the user to input time information and textual description, recording the time information and the textual description input by the user, and generating the calendar entry with the textual description and the time information;
the step of searching for a UGC matching the calendar entry, comprises:
searching for a UGC which matches a preset matching rule with the time information; and/ or
extracting a keyword of the textual description and searching for the UGC which matches with the preset matching rule with the keyword.

3. The method according to claim 1, wherein the step of receiving a calendar entry establishment request of a user, and establishing a calendar entry on the interface, further comprises:
noticing the user to input geographical information, recording the geographical information input by the user; generating a calendar entry with the geographical information;
the step of searching for a UGC matching the calendar entry further comprises:
searching for a UGC which matches a preset matching rule with the geographical information.

4. The method according to claim 1, further comprising:
noticing the user to establish the calendar entry, after receiving the UGC establishing request of the user and establishing the UGC; and
associating the UGC established by the user with the calendar entry after establishing the calendar entry.

5. The method according to claim 1, further comprising:
displaying the calendar entry established by the user and/or the user's friends after receiving a UGC establishing request of the user and establishing the UGC; and
receiving a selection command for the calendar entry of the user, and associating the calendar entry selected by the user with the UGC established by the user.

6. The method according to claim 1, wherein the step of displaying the calendar entry and the information of the UGC associated with the calendar entry, comprises:
displaying the calendar entry and the information of the UGC associated with the calendar entry on interfaces of both a calendar entry establisher and friends of the calendar entry establisher.

7. The method according to claim 6, comprising:
adding timestamp on the calendar entry when establishing the calendar entry;
updating the timestamp when establishing the UGC and associating the UGC with the calendar entry; and
scheduling calendar entries displayed in order of timestamps when displaying the calendar entries on the interfaces of both the calendar entry establisher and the friends of the calendar entry establisher.

8. A device for processing a user generated content (UGC), wherein the device comprises:
one or more processors;
a memory storing one or more program modules configured for execution by the one or more processors, the one or more program modules comprising a calendar entry establishing module (801), configured to provide an interface and receive a calendar entry establishment request of a user to establish a calendar entry on the interface;
**characterised in that**:
the one or more program modules further comprise:
a UGC searching module (802), configured to search for a UGC matching the calendar entry, and display the UGC on the interface, wherein the calendar entry comprises time information and textual description representative of an event, and wherein the calendar entry serves as a point of convergence for a collection of UGCs labeled with the event;
an associating module (803), configured to receive a selection command for selecting the UGC by the user from the interface, and associate the UGC selected with the calendar entry, wherein the associating module (803) is further configured to:
extract summary information of the UGC to be associated, and
store the extracted summary information as an attachment of the calendar entry; and
a calendar entry displaying module (804), configured to display the calendar entry and the information of the UGC associated with the calendar entry on the interface, wherein the calendar entry displaying module (804) is further configured, when displaying the calendar entry, to read and display the summary information of the associated UGC.

9. The device according to claim 8, wherein the calendar entry establishing module (801) is further configured to notice the user to input time information and textual description, record the time information and textual description input by the user, and generate the calendar entry with the textual description and the time information; and
wherein the UGC searching module (802) is further configured to search a UGC which matches a preset matching rule with the time information; and/or extract a keyword of the textual description and search for the UGC which matches the preset matching rule with the key.

10. The device according to claim 8, wherein the calendar entry establishing module (801) is further configured to notice the user to input geographical information, record the geographical information input by the user, and generate a calendar entry with the geographical information; and
wherein the UGC searching module (802) is further configured to search for a UGC which matches with a preset matching rule with the geographical information.

11. The device according to claim 8, wherein the one or more program modules further comprises: a UGC establishing module (805) configured to notice the user to establish the calendar entry after receiving the UGC establishing request of the user and establishing the UGC; and
wherein the associating module (803) is further configured to associate the UGC established by the user with the calendar entry after the calendar entry establishing module establishing the calendar entry.

12. The device according to claim 8, wherein the one or more program modules further comprises: a UGC establishing module (805) configured to display the calendar entry established by the user and/or the user's friends after receiving a UGC establishing request of the user and establishing the UGC; and
wherein the associating module (803) is further configured to receive a selection command for the calendar entry of the user displayed by the UGC establishing module, and associate the calendar entry selected by the user with the UGC established by the user.

13. The device according to claim 8, wherein the calendar entry displaying module (804) is further configured to display the calendar entry and the information of the UGC associated with the calendar entry on interfaces of both the calendar entry establisher and friends of the calendar entry establisher.

14. The device according to claim 13, wherein the calendar entry establishing module (801) is further configured to add timestamp on the calendar entry when establishing the calendar; the associating module is further configured to updating the timestamp when establishing the UGC and associating the UGC with the calendar entry; and
wherein the calendar entry displaying module (804) is further configured to schedule the calendar entries displayed in order of the timestamps when displaying the calendar entries on the interfaces of both the calendar entry establisher and the friends of the calendar entry establisher.

15. A non-volatile computer readable storage media, storing one or more programs for execution by one or more processor and a memory, the one or more programs comprising instructions for:
providing an interface;
receiving a calendar entry establishment request of a user, and establishing a calendar entry on the interface;
**characterised in that**:
the one or more programs further comprise instructions for:
searching for a UGC matching the calendar entry, and displaying the UGC on the interface, wherein the calendar entry comprises time information and textual description representative of an event, and wherein the calendar entry serves as a point of convergence for a collection of UGCs labeled with the event;
receiving a selection command for selecting the UGC from the interface, and associating the UGC selected with the calendar entry, wherein associating the UGC comprises:
extracting summary information of the UGC to be associated, and
storing the extracted summary information as an attachment of the calendar entry; and
displaying the calendar entry and information of the UGC associated with the calendar entry on the interface, wherein, when displaying the calendar entry, the summary information of the associated UGC is read and displayed.

## Patentansprüche

1. Verfahren zur Verarbeitung von durch Benutzer erstelltem Inhalt (User Generated Content, UGC), wobei das Verfahren Folgendes umfasst:
an einer Vorrichtung mit einem oder mehreren Prozessoren und einem Arbeitsspeicher zum Speichern von einem oder mehreren Programmen, die durch den einen oder die mehreren Prozessoren ausführbar sind, um folgende Schritte durchzuführen:
das Bereitstellen einer Oberfläche;
das Empfangen einer Kalendereintragerstellungsanfrage von einem Benutzer und das Erstellen eines Kalendereintrags auf der Oberfläche,
**dadurch gekennzeichnet, dass**:
das eine oder die mehreren Programme ferner durch den einen oder die mehreren Prozessoren ausführbar sind, um folgende Schritte durchzuführen:
das Suchen nach einem UGC, der mit dem Kalendereintrag übereinstimmt und das Anzeigen des UGC auf der Oberfläche, wobei der Kalendereintrag Zeitinformationen und eine Textbeschreibung umfasst, die für ein Ereignis steht, und wobei der Kalendereintrag als Konvergenzpunkt für eine Sammlung von mit dem Ereignis markierten UGC dient;
das Empfangen eines Auswahlbefehls zum Auswählen des UGC von der Oberfläche und das Zuordnen des ausgewählten UGC mit dem Kalendereintrag, wobei das Zuordnen des UGC Folgendes umfasst:
das Extrahieren von zusammenfassenden Informationen des zuzuordnenden UGC und das Speichern der extrahierten zusammenfassenden Informationen als Anhang des Kalendereintrags und
das Anzeigen des Kalendereintrags und der Informationen des dem Kalendereintrag zugeordneten UGC auf der Oberfläche, wobei bei Anzeigen des Kalendereintrags die zusammenfassenden Informationen des zugeordneten UGC gelesen und angezeigt werden.

2. Verfahren nach Anspruch 1, wobei der Schritt des Empfanges einer Kalendereintragerstellungsanfrage von einem Benutzer und das Erstellen eines Kalendereintrags auf der Oberfläche Folgendes umfassen:
das Hinweisen des Benutzers auf die Eingabe von zeitlichen Informationen und Textbeschreibung, das Aufzeichnen der zeitlichen Informationen und Textbeschreibung, die durch den Benutzer eingegeben wurden, und das erstellen des Kalendereintrags mit der Textbeschreibung und den zeitlichen Informationen;
wobei der Schritt des Suchens nach einem UGC, der mit dem Kalendereintrag übereinstimmt, Folgendes umfasst:
das Suchen nach einem UGC, der mit einer vorab festgelegten Abgleichsregel mit den zeitlichen Informationen übereinstimmt, und/oder
das Extrahieren eines Schlüsselworts der Textbeschreibung und das Suchen nach dem UGC, der gemäß der vorab festgelegten Abgleichsregel mit dem Schlüsselwort übereinstimmt.

3. Verfahren nach Anspruch 1, wobei der Schritt des Empfangens einer Kalendereintragerstellungsanfrage von einem Benutzer und das Erstellen eines Kalendereintrags auf der Oberfläche ferner Folgendes umfassen:
das Hinweisen des Benutzers auf die Eingabe geographischer Informationen, das Aufzeichnen der durch den Benutzer eingegebenen geographischen Informationen, das Erstellen eines Kalendereintrags mit den geographischen Informationen;
wobei der Schritt des Suchens nach einem UGC, der mit dem Kalendereintrag übereinstimmt, Folgendes umfasst:
das Suchen nach einem UGC, der mit einer vorab festgelegten Abgleichsregel mit den geographischen Informationen übereinstimmt.

4. Verfahren nach Anspruch 1, das ferner Folgendes umfasst:
das Hinweisen des Benutzers auf das Erstellen des Kalendereintrags nach Empfang der UGC-Erstellungsanfrage von dem Benutzer und dem Erstellen des UGC und
das Zuordnen des durch den Benutzer erstellten UGC mit dem Kalendereintrag nach Erstellen des Kalendereintrags.

5. Verfahren nach Anspruch 1, das ferner Folgendes umfasst:
das Anzeigen des durch den Benutzer und/oder Freunde des Benutzers erstellten Kalendereintrags nach Empfangen einer UGC-Erstellungsanfrage von dem Benutzer und Erstellen des UGC und
das Empfangen eines Auswahlbefehls für den Kalendereintrag von dem Benutzer und das Zuordnen des durch den Benutzer ausgewählten Kalendereintrags mit dem durch den Benutzer erstellten UGC.

6. Verfahren nach Anspruch 1, wobei der Schritt des Anzeigens des Kalendereintrags und der Informationen des dem Kalendereintrag zugeordneten UGC Folgendes umfasst:
das Anzeigen des Kalendereintrags und der Informationen des dem Kalendereintrag zugeordneten UGC auf Oberflächen sowohl des Kalendereintragerstellers als auch von Freunden des Kalendereintragerstellers.

7. Verfahren nach Anspruch 6, das Folgendes umfasst:
das Hinzufügen eines Zeitstempels mit dem Kalendereintrag bei Erstellen des Kalendereintrags;
das Aktualisieren des Zeitstempels bei Erstellen des UGC und Zuordnen des UGC mit dem Kalendereintrag und
das Erfassen von angezeigten Kalendereinträgen in der Reihenfolge der Zeitstempels bei Anzeige der Kalendereinträge auf den Oberflächen sowohl des Kalendereintragerstellers als auch von Freunden des Kalendereintragerstellers.

8. Vorrichtung zur Verarbeitung von durch Benutzer erstelltem Inhalt (UGC), wobei die Vorrichtung Folgendes umfasst:
einen oder mehrere Prozessoren;
einen Arbeitsspeicher, der ein oder mehrere Programmmodule speichert, die konfiguriert sind, um durch den einen oder die mehreren Prozessoren ausgeführt zu werden, wobei das eine oder die mehreren Programmmodule ein Kalendereintragerstellungsmodul (801) umfassen, das konfiguriert ist, um eine Oberfläche bereitzustellen und eine Kalendereintragerstellungsanfrage von einem Benutzer zu empfangen, um einen Kalendereintrag auf der Oberfläche zu erstellen;
**dadurch gekennzeichnet, dass**:
das eine oder die mehreren Programmmodule ferner Folgendes umfasst:
ein UGC-Suchmodul (802), das konfiguriert ist, um nach einem UGC zu suchen, der mit dem Kalendereintrag übereinstimmt, und den UGC auf der Oberfläche anzuzeigen, wobei der Kalendereintrag zeitliche Informationen und eine Textbeschreibung, die für ein Ereignis steht, umfasst und wobei der Kalendereintrag als Konvergenzpunkt für eine Sammlung von UGC dient, die mit dem Ereignis markiert sind;
ein Zuordnungsmodul (803), das konfiguriert ist, um einen Auswahlbefehl zur Auswahl von UGC durch den Benutzer von der Oberfläche zu empfangen und den ausgewählten UGC dem Kalendereintrag zuzuordnen, wobei das Zuordnungsmodul (803) ferner konfiguriert ist, um:
zusammenfassende Informationen des zuzuordnenden UGC zu extrahieren und
die extrahierten zusammenfassenden Informationen als Anhang des Kalendereintrags zu speichern; und
ein Kalendereintraganzeigemodul (804), das konfiguriert ist, um den Kalendereintrag und die Informationen des dem Kalendereintrag zugeordneten UGC auf der Oberfläche anzuzeigen, wobei das Kalendereintraganzeigemodul (804) ferner konfiguriert ist, um bei Anzeige des Kalendereintrags die zusammenfassenden Informationen des zugeordneten UGC zu lesen und anzuzeigen.

9. Vorrichtung nach Anspruch 8, wobei das Kalendereintragerstellungsmodul (801) ferner konfiguriert ist, um den Benutzer darauf hinzuweisen, zeitliche Informationen und Textbeschreibung einzugeben, die zeitlichen Informationen und die Textbeschreibung, die durch den Benutzer eingegeben wurden, aufzuzeichnen und den Kalendereintrag mit der Textbeschreibung und den zeitlichen Informationen zu erstellen, und
wobei das UGC-Suchmodul (802) ferner konfiguriert ist, um einen UGC zu suchen, der mit einer vorab festgelegten Abgleichsregel mit den zeitlichen Informationen übereinstimmt; und/oder ein Schlüsselwort der Textbeschreibung zu extrahieren und nach dem UGC zu suchen, der mit der vorab festgelegten Abgleichsregel mit dem Schlüssel übereinstimmt.

10. Vorrichtung nach Anspruch 8, wobei das Kalendereintragerstellungsmodul (801) ferner konfiguriert ist, um den Benutzer darauf hinzuweisen, geographische Informationen einzugeben, die durch den Benutzer eingegebenen geographischen Informationen aufzuzeichnen und den Kalendereintrag mit den geographischen Informationen zu erstellen, und
wobei das UGC-Suchmodul (802) ferner konfiguriert ist, um einen UGC zu suchen, der mit einer vorab festgelegten Abgleichsregel mit den geographischen Informationen übereinstimmt.

11. Vorrichtung nach Anspruch 8, wobei das eine oder die mehreren Programmmodule ferner Folgendes umfasst: ein UGC-Erstellungsmodul (805), das konfiguriert ist, um den Benutzer darauf hinzuweisen, den Kalendereintrag nach Empfang der UGC-Erstellungsanfrage von dem Benutzer und dem Erstellen des UGC zu erstellen, und
wobei das Zuordnungsmodul (803) ferner konfiguriert ist, um dem durch den Benutzer erstellten UGC dem Kalendereintrag zuzuordnen, nachdem das Kalendereintragerstellungsmodul den Kalendereintrag erstellt hat.

12. Vorrichtung nach Anspruch 8, wobei das eine oder die mehreren Programmmodule ferner Folgendes umfassen: ein UGC-Erstellungsmodul (805), das konfiguriert ist, um den durch den Benutzer und/oder Freunde des Benutzers erstellten Kalendereintrag anzuzeigen, nachdem eine UGC-Erstellungsanfrage von dem Benutzer empfangen und der UGC erstellt wurde; und
wobei das Zuordnungsmodul (803) ferner konfiguriert ist, um einen Auswahlbefehl für den Kalendereintrag des Benutzers zu empfangen, der durch das UGC-Erstellungsmodul angezeigt wird, und den durch den Benutzer ausgewählten Kalendereintrag dem durch den Benutzer erstellten UGC zuzuordnen.

13. Vorrichtung nach Anspruch 8, wobei das Kalendereintraganzeigemodul (804) ferner konfiguriert ist, um den Kalendereintrag und die Informationen des dem Kalendereintrag zugeordneten UGC auf Oberflächen sowohl des Kalendereintragerstellers als auch von Freunden des Kalendereintragerstellers anzuzeigen.

14. Vorrichtung nach Anspruch 13, wobei das Kalendereintragerstellungsmodul (801) ferner konfiguriert ist, um einen Zeitstempel mit dem Kalendereintrag hinzuzufügen, wenn der Kalender erstellt wird; wobei das Zuordnungsmodul ferner konfiguriert ist, den Zeitstempel zu aktualisieren, wenn der UGC erstellt wird und der UGC dem Kalendereintrag zugeordnet wird; und
wobei das Kalendereintraganzeigemodul (804) ferner konfiguriert ist, um die angezeigten Kalendereinträge in der Reihenfolge der Zeitstempel zu erfassen, wenn die Kalendereinträge auf den Oberflächen sowohl des Kalendereintragerstellers als auch von den Freunden des Kalendereintragerstellers angezeigt werden.

15. Nicht flüchtiges computerlesbares Speichermedium, das ein oder mehrere Programme zur Ausführung durch einen oder mehrere Prozessoren und einen Arbeitsspeicher speichert, wobei das eine oder die mehreren Programme Befehle umfassen, um:
eine Oberfläche bereitzustellen;
eine Kalendereintragerstellungsanfrage von einem Benutzer zu empfangen und einen Kalendereintrag auf der Oberfläche zu erstellen;
**dadurch gekennzeichnet, dass**:
das eine oder die mehreren Programme ferner Befehle umfassen, um:
nach einem UGC zu suchen, der mit dem Kalendereintrag übereinstimmt, und den UGC auf der Oberfläche anzuzeigen, wobei der Kalendereintrag zeitliche Informationen und Textbeschreibung umfasst, die für ein Ereignis steht, und wobei der Kalendereintrag als Konvergenzpunkt für eine Sammlung von mit dem Ereignis markierten UGC dient;
einen Auswahlbefehl zum Auswählen der UGC von der Oberfläche zu empfangen und den ausgewählten UGC dem Kalendereintrag zuzuordnen, wobei das Zuordnen des UGC Folgendes umfasst:
das Extrahieren von zusammenfassenden Informationen des zuzuordnenden UGC und
das Speichern der extrahierten zusammenfassenden Informationen als Anhang des Kalendereintrags und
das Anzeigen des Kalendereintrags und der Informationen des dem Kalendereintrag zugeordneten UGC auf der Oberfläche, wobei bei Anzeige des Kalendereintrags die zusammenfassenden Informationen des zugeordneten UGC gelesen und angezeigt werden.

## Revendications

1. Procédé de traitement d'un contenu généré par utilisateur (UGC), comprenant les étapes consistant à :
au niveau d'un dispositif ayant un ou plusieurs processeurs et une mémoire pour stocker un ou plusieurs programmes qui sont exécutables par les un ou plusieurs processeurs :
fournir une interface ;
recevoir une demande d'établissement d'entrée d'agenda d'un utilisateur, et établir une entrée d'agenda sur l'interface,
**caractérisé en ce que** :
les un ou plusieurs programmes sont en outre exécutables par les un ou plusieurs processeurs pour effectuer les étapes consistant à :
rechercher un UGC d'appariement de l'entrée d'agenda, et afficher l'UGC sur l'interface, dans lequel l'entrée d'agenda comprend des informations temporelles et une description textuelle représentatives d'un événement, et dans lequel l'entrée d'agenda sert de point de convergence pour une collection d'UGC marqués avec l'événement ;
recevoir une commande de sélection pour sélectionner l'UGC à partir de l'interface, et associer l'UGC sélectionné à l'entrée d'agenda, dans lequel l'association de l'UGC comprend les étapes consistant à :
extraire des informations récapitulatives sur l'UGC à associer, et
stocker les informations récapitulatives extraites en tant que pièce jointe de l'entrée d'agenda ; et
afficher l'entrée d'agenda et les informations sur l'UGC associé à l'entrée d'agenda sur l'interface, dans lequel, lors de l'affichage de l'entrée d'agenda, les informations récapitulatives de l'UGC associé sont lues et affichées.

2. Procédé selon la revendication 1, dans lequel l'étape consistant à recevoir une demande d'établissement d'entrée d'agenda d'un utilisateur, et à établir une entrée d'agenda sur l'interface comprend les étapes consistant à :
Notifier à l'utilisateur d'entrer des informations temporelles et une description textuelle, enregistrer les informations temporelles et la description textuelle entrées par l'utilisateur, et générer l'entrée d'agenda avec la description textuelle et les informations temporelles ;
l'étape de recherche d'un UGC d'appariement de l'entrée d'agenda comprenant les étapes consistant à :
rechercher un UGC qui apparie une règle d'appariement prédéfinie avec les informations temporelles ; et/ou
extraire un mot-clé de la description textuelle et rechercher l'UGC qui apparie la règle d'appariement prédéfinie avec le mot-clé.

3. Procédé selon la revendication 1, dans lequel l'étape consistant à recevoir une demande d'établissement d'entrée d'agenda d'un utilisateur, et à établir une entrée d'agenda sur l'interface, comprend en outre les étapes consistant à :
notifier à l'utilisateur d'entrer des informations géographiques, enregistrer les informations géographiques entrer par l'utilisateur ; générer une entrée d'agenda avec les informations géographiques ;
l'étape de recherche d'un UGC d'appariement de l'entrée d'agenda comprenant les étapes consistant à :
rechercher un UGC qui apparie une règle d'appariement prédéfinie avec les informations géographiques.

4. Procédé selon la revendication 1, comprenant en outre :
notifier à l'utilisateur d'établir l'entrée d'agenda, après réception de la demande d'établissement d'UGC de l'utilisateur et établissement de l'UGC ; et
associer l'UGC établi par l'utilisateur à l'entrée d'agenda après établissement de l'entrée d'agenda.

5. Procédé selon la revendication 1, comprenant en outre les étapes consistant à :
afficher l'entrée d'agenda établie par l'utilisateur et/ou les amis de l'utilisateur après réception d'une demande d'établissement d'UGC de l'utilisateur et établissement de l'UGC ; et
recevoir une commande de sélection pour l'entrée d'agenda de l'utilisateur, et associer l'entrée d'agenda sélectionnée par l'utilisateur à l'UGC établi par l'utilisateur.

6. Procédé selon la revendication 1, dans lequel l'étape d'affichage de l'entrée d'agenda et des informations de l'UGC associé à l'entrée d'agenda comprend l'étape consistant à :
afficher l'entrée d'agenda et les informations de l'UGC associé à l'entrée d'agenda sur des interfaces à la fois d'un dispositif d'établissement d'entrée d'agenda et d'amis du dispositif d'établissement d'entrée d'agenda.

7. Procédé selon la revendication 6, comprenant les étapes consistant à :
ajouter une estampille temporelle sur l'entrée d'agenda lors de l'établissement de l'entrée d'agenda ;
mettre à jour l'estampille temporelle lors de l'établissement de l'UGC et associer l'UGC à l'entrée d'agenda ; et
planifier des entrées d'agenda affichées dans l'ordre des estampilles temporelles lors de l'affichage des entrées d'agenda sur les interfaces à la fois du dispositif d'établissement d'entrée d'agenda et des amis du dispositif d'établissement d'entrée d'agenda.

8. Dispositif pour traiter un contenu généré par l'utilisateur (UGC), dans lequel le dispositif comprend :
un ou plusieurs processeurs ;
une mémoire stockant un ou plusieurs modules de programme configurés pour être exécutés par les un ou plusieurs processeurs, les un ou plusieurs modules de programme comprenant un module d'établissement d'entrée d'agenda (801), configuré pour fournir une interface et recevoir une demande d'établissement d'entrée d'agenda d'un utilisateur afin d'établir une entrée d'agenda sur l'interface ;
**caractérisé en ce que** :
les un ou plusieurs modules de programme comprennent en outre :
un module de recherche d'UGC (802), configuré pour rechercher un UGC d'appariement de l'entrée d'agenda et afficher l'UGC sur l'interface, dans lequel l'entrée d'agenda comprend des informations temporelles et une description textuelle représentatives d'un événement, et dans lequel l'entrée d'agenda sert de point de convergence pour une collection d'UGC marqués avec l'événement ;
un module d'association (803), configuré pour recevoir une commande de sélection pour sélectionner l'UGC par l'utilisateur à partir de l'interface, et associer l'UGC sélectionné à l'entrée d'agenda, dans lequel le module d'association (803) est en outre configuré pour :
extraire des informations récapitulatives sur l'UGC à associer, et
stocker les informations récapitulatives extraites en tant que pièce jointe de l'entrée d'agenda ; et
un module d'affichage d'entrée d'agenda (804), configuré pour afficher l'entrée d'agenda et les informations de l'UGC associé à l'entrée d'agenda sur l'interface, dans lequel le module d'affichage d'entrée d'agenda (804) est en outre configuré, lors de l'affichage de l'entrée d'agenda, pour lire et afficher les informations récapitulatives de l'UGC associé.

9. Dispositif selon la revendication 8, dans lequel le module d'établissement d'entrée d'agenda (801) est en outre configuré pour notifier à l'utilisateur d'entrer des informations temporelles et une description textuelle, enregistrer les informations temporelles et la description textuelle entrées par l'utilisateur, et générer l'entrée d'agenda avec la description textuelle et les informations temporelles ; et
dans lequel le module de recherche d'UGC (802) est en outre configuré pour rechercher un UGC qui apparie une règle d'appariement prédéfinie avec les informations temporelles ; et/ou pour extraire un mot-clé de la description textuelle et rechercher l'UGC qui apparie la règle d'appariement prédéfinie avec la clé.

10. Dispositif selon la revendication 8, dans lequel le module d'établissement d'entrée d'agenda (801) est en outre configuré pour notifier à l'utilisateur d'entrer des informations géographiques, enregistrer les informations géographiques saisies par l'utilisateur et générer une entrée d'agenda avec les informations géographiques ; et
dans lequel le module de recherche d'UGC (802) est en outre configuré pour rechercher un UGC qui apparie une règle d'appariement prédéfinie avec les informations géographiques.

11. Dispositif selon la revendication 8, dans lequel les un ou plusieurs modules de programme comprennent en outre : un module d'établissement d'UGC (805) configuré pour notifier à l'utilisateur d'établir l'entrée d'agenda après réception de la demande d'établissement d'UGC et établissement de l'UGC ; et
dans lequel le module d'association (803) est en outre configuré pour associer l'UGC établi par l'utilisateur à l'entrée d'agenda après établissant de l'entrée d'agenda par le module d'établissement d'entrée d'agenda.

12. Dispositif selon la revendication 8, dans lequel les un ou plusieurs modules de programme comprennent en outre : un module d'établissement d'UGC (805) configuré pour afficher l'entrée d'agenda établie par l'utilisateur et/ou les amis de l'utilisateur après réception d'une demande d'établissement d'UGC de l'utilisateur et établissement de l'UGC ; et
dans lequel le module d'association (803) est en outre configuré pour recevoir une commande de sélection pour l'entrée d'agenda de l'utilisateur affichée par le module d'établissement d'UGC, et associer l'entrée d'agenda sélectionnée par l'utilisateur à l'UGC établi par l'utilisateur.

13. Dispositif selon la revendication 8, dans lequel le module d'affichage d'entrée d'agenda (804) est en outre configuré pour afficher l'entrée d'agenda et les informations de l'UGC associé à l'entrée d'agenda sur des interfaces à la fois du dispositif d'établissement d'entrée d'agenda et des amis du dispositif d'établissement d'entrée d'agenda.

14. Dispositif selon la revendication 13, dans lequel le module d'établissement d'entrée d'agenda (801) est en outre configuré pour ajouter une estampille temporelle sur l'entrée d'agenda lors de l'établissement de l'agenda ; le module d'association est en outre configuré pour mettre à jour l'estampille temporelle lors de l'établissement de l'UGC et de l'association de l'UGC avec l'entrée d'agenda ; et
dans lequel le module d'affichage d'entrée d'agenda (804) est en outre configuré pour planifier les entrées d'agenda affichées dans l'ordre des estampilles temporelles lors de l'affichage des entrées d'agenda sur les interfaces à la fois du dispositif d'établissement d'entrée d'agenda et des amis du dispositif d'établissement d'entrée d'agenda.

15. Support de stockage lisible par ordinateur non volatile, stockant un ou plusieurs programmes à exécuter par un ou plusieurs processeurs et une mémoire, les un ou plusieurs programmes comprenant des instructions pour :
fournir une interface ;
recevoir une demande d'établissement d'entrée d'agenda d'un utilisateur et établir une entrée d'agenda sur l'interface ;
**caractérisé en ce que** :
les un ou plusieurs programmes comprennent en outre des instructions pour :
rechercher un UGC d'appariement de l'entrée d'agenda, et afficher l'UGC sur l'interface, l'entrée d'agenda comprenant des informations temporelles et une description textuelle représentatives d'un événement, et l'entrée d'agenda servant de point de convergence pour une collection d'UGC marqués avec l'événement ;
recevoir une commande de sélection pour sélectionner l'UGC à partir de l'interface, et associer l'UGC sélectionné à l'entrée d'agenda, l'association de l'UGC comprenant les étapes consistant à :
extraire des informations récapitulatives sur l'UGC à associer, et
stocker les informations récapitulatives extraites en tant que pièce jointe de l'entrée d'agenda ; et
afficher l'entrée d'agenda et les informations de l'UGC associé à l'entrée d'agenda sur l'interface, dans lequel, lors de l'affichage de l'entrée d'agenda, les informations récapitulatives de l'UGC associé sont lues et affichées.
